# EUROPÄISCHE PATENTSCHRIFT

(11) **EP 2 489 491 B1**
(45) Veröffentlichungstag und Bekanntmachung des Hinweises auf die Patenterteilung: **25.11.2015**
(21) Anmeldenummer: 11195888.0
(22) Anmeldetag: 28.12.2011
(51) Int. Cl.: F16C 33/64, B29C 45/56, B29C 45/00, B29C 45/04

(54) **Vorrichtung und Verfahren zur Herstellung von Kugellagerringen**
Method and device for producing ball bearing rings
Dispositif et procédé destinés à la fabrication d'anneaux de roulement à billes

(30) Priorität: 17.02.2011 DE 102011011533
(43) Veröffentlichungstag der Anmeldung: 22.08.2012
(73) Patentinhaber: NP Germany GmbH, 59929 Berlin (DE)
(72) Erfinder: Baukloh, Horst, 58540 Meinerzhagen (DE)
(74) Vertreter: Patentanwälte Dörner & Kötter PartG mbB

(56) Entgegenhaltungen:
- EP-A2- 2 236 263
- DE-C- 936 728
- DE-C1- 10 127 566
- US-A- 4 568 206
- US-A1- 2008 079 191

## Beschreibung

Die Erfindung betrifft eine Vorrichtung zur Herstellung von Kugellagerringen im Kunststoffspritzverfahren nach dem Patentanspruch 1. Die Erfindung betrifft weiterhin ein Verfahren zur Herstellung von Kugellagerringen nach dem Oberbegriff des Patentanspruchs 9.

Zur Herstellung von Thermoplastformteilen mit Hinterschneidungen sind Spritzgießformen bekannt, bei denen so genannte Faltkerne eingesetzt werden. Dabei bilden die Außenflächen der Segmente dieser Faltkerne im Spritzzustand die Form für die Innenwandung des Spritzteils. Weist diese Innenwandung Hinterschneidungen auf, so muss der Faltkern im Entformungszustand auf einen kleineren Außendurchmesser gebracht werden, der das Entformen des Spritzteils von dem Faltkern ermöglicht. Die Faltkerne ermöglichen dies dadurch, dass deren Segmente bei Axialbewegung entlang eines Trägerprofils nach innen zusammenfallen. Im Stand der Technik werden derartige Spritzgießformen auch zur Herstellung von Kugellagerringen eingesetzt. Nachteilig an den bekannten Faltkernen ist dabei jedoch, dass die einzelnen Segmente des Faltkerns über ihren Umfang an den Stoßkanten Trennmarkierungen bewirken, welche bei der Herstellung der Kugellagerringe mit ihren Laufrillen problematisch sind, da die Trennmarkierungen die Bewegung der Kugeln des Kugellagers beeinträchtigen können. In der US 4,568,206 ist eine Vorrichtung zur Herstellung von Kugelkäfigen beschrieben. Aus der EP 2 236 263 A2 ist ein Spritzgießwerkzeug sowie ein Spritzgießverfahren zur Herstellung mehrteiliger Formteile bekannt. In der DE 101 27 566 C1 ist eine Vorrichtung sowie ein Verfahren zur trennmarkierungsfreien Herstellung von Kugellagerringen offenbart.

Hier will die Erfindung Abhilfe schaffen. Der Erfindung liegt die Aufgabe zu Grunde, eine verbesserte Vorrichtung zur Herstellung von Kugellagerringen mit Laufrillen im Kunststoffspritzgießverfahren bereitzustellen, bei der derartige hervorstehende Trennmarkierungen vermieden sind. Gemäß der Erfindung wird diese Aufgabe durch die Merkmale des Patentanspruchs 1 gelöst.

Mit der Erfindung ist eine Vorrichtung zur Herstellung von Kugellagerringen mit Laufrillen im Kunststoffspritzgießverfahren geschaffen, bei der die Bildung von hervorstehenden Trennmarkierungen vermieden ist. Durch die Aufteilung des Kugellagerrings in zwei Kugellagerringteile, welche mittels zwei angeordneten Formkernen hergestellt sind, ist ein Faltkern nicht mehr erforderlich. Durch die angeordneten Prägeplatten wird die Schwindung des eingespritzten Kunststoffmaterials reduziert, wodurch sehr enge Toleranzen erzielt sind. Lunker, Einfallstellen und Bindenähte sind so vermieden. Die so hergestellten Kugellagerringteile sind spannungsarm und verzugsfrei und können in einem nachfolgenden Schritt zu einem Kugellagerring zusammengesetzt werden.

Benachbart zueinander sind ein erster Formkern neben einer ersten Prägeplatte an einem Tragkörper angeordnet und an dem Kolben sind benachbart zueinander eine zweite Prägeplatte neben einem zweiten Formkern angeordnet, derart, dass jeweils ein Formkern einer Prägeplatte gegenüberliegend angeordnet ist. Hierdurch ist die Herstellung zweier gegenseitig zueinander ausgerichteter Kugellagerringteiler erzielt.

Dabei ist der Kolben rotierbar ausgebildet, derart, dass die Prägeplatten-und die Formkerne in eine gegenüberliegende Position bringbar sind. Hierdurch ist durch ein nachfolgendes Verschieben des Kolbens eine Montage der beiden Kugellagerringteile innerhalb der Vorrichtung ermöglicht. Vorteilhaft sind die Formkerne derart ausgebildet, dass die durch die Einbuchtung des ersten Formkerns an dem ersten Kugellagerringteil ausgeformte Auskragung vollständig in die durch das auskragende Formelement des zweiten Formkerns in das zweite Kugellagerringteil eingeformte Ausnehmung einschiebbar ist. Hierdurch ist ein spaltfreies Anliegen der beiden Kugellagerringteile aneinander erzielbar.

In Weiterbildung der Erfindung ist an wenigstens einer Prägeplatte wenigstens ein Formelement angeordnet. Hierdurch ist über den Prägeprozess eine beliebige Rückenkontur an dem Ringformteil erzielbar.

Dadurch, dass die Prägeplatte Bestandteil eines Kolbens ist, der relativ zum gegenüberliegenden Formkern verschiebbar ist, ist eine gleichmäßige Komprimierung des Spritzgewichtes in den Gießraum erzielbar. Die Prägeplatte kann dabei entweder an dem Kolben angeordnet sein oder auch in den Kolben "eingearbeitet" sein, sodass ein Bereich des Kolbens die Funktion der Prägeplatte übernimmt. Eine solche funktionelle Integration ist vorliegend unter dem Begriff "Prägeplatte" subsumiert.

In Weiterbildung der Erfindung ist in der Formkontur des ersten Formkerns wenigstens eine Einbuchtung vorhanden und in der Formkontur des zweiten Formkerns ist wenigstens ein auskragendes Formelement zur Ausformung eines Verbindungselements angeordnet, welches mit der Einbuchtung des ersten Formkerns korrespondiert. Hierdurch sind die hergestellten Kugellagerringteile zusammensteckbar ausgebildet, wodurch deren einfache Verbindung ermöglicht ist.

Bevorzugt weist die Einbuchtung ein größeres Maß in der Tiefe auf, als das auskragende Formelement in seiner Länge. Hierdurch ist bewirkt, dass nachdem Zusammenstecken der beiden Kugellagerringteile zwischen den Verbindungselementen ein Zwischenraum verbleibt, welcher nachfolgend zugespritzt werden kann. Hierdurch ist eine stoffflüssige Verbindung der Verbindungsteile erzielbar.

In Weiterbildung der Erfindung ist die erste Prägeplatte innerhalb einer Vertiefung des Tragkörpers gegenüber dessen Oberfläche zurückversetzt und die zweite Prägeplatte innerhalb einer Vertiefung des Kolbens gegenüber dessen Oberfläche zurückversetzt angeordnet. Hierdurch sind die Kugellagerringteile nach deren Herstellung an dem Tragkörper bzw. an dem Kolben innerhalb der Vertiefung gehalten.

Der vorliegenden Erfindung liegt weiterhin die Aufgabe zu Grunde, ein Verfahren zur Herstellung von Kugellagerringen mit Laufrillen zuschaffen, bei dem die Ausbildung von hervorstehenden Trennmarkierung vermieden ist. Gemäß der Erfindung wird diese Aufgabe durch die Merkmale des Patentanspruchs 9 gelöst.

Mit der Erfindung ist ein Verfahren zur Herstellung von Kugellagerringen mit Laufrillen geschaffen, bei dem die Ausbildung von hervorstehenden Trennmarkierungen vermieden ist. Dabei werden bevorzugt an den beiden Kugellagerringteilen innerhalb des Spritzgießprozesses zu deren Verbindung korrespondierende Verbindungselemente angeformt, welche im Zuge der nachfolgenden Positionierung der Kugellagerringteile innerhalb des Werkzeuges miteinander verbunden werden.

In Weiterbildung der Erfindung werden die korrespondierenden Verbindungselemente derart ausgebildet, dass zwischen diesen nach deren Verbindung ein Zwischenraum verbleibt, wobei der Zwischenraum im Anschluss an die Verbindung in einem anschließenden Spritzprozess mit Kunststoffmaterial verfüllt wird. Hierdurch ist eine formschlüssige Verbindung der Verbindungselemente erzielbar.

In Ausgestaltung der Erfindung erfolgt die Herstellung der Kugellagerringteile diametral gegenüberliegend innerhalb des Werkzeuges und die Positionierung der Kugellagerringteile erfolgt innerhalb des Werkzeuges über eine Rotation eines ein Kugellagerringteil exzentrisch aufnehmenden Kolbens um eine zwischen den Kugellagerringteilen verlaufende Rotationsachse. Hierdurch ist eine exakte Positionierung eines Kugellageringteils gegenüberliegend dem zweiten Kugellagerringteil zu dessen nachfolgender Verbindung ermöglicht.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

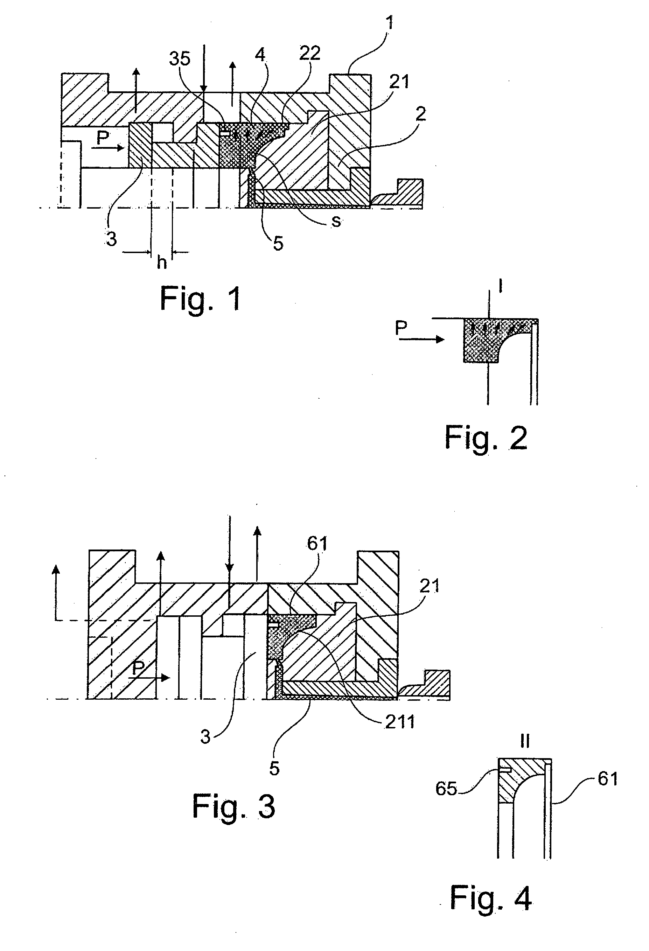

- Fig. 1: die schematische Darstellung einer Vorrichtung zur Herstellung von Kugellagerringen in der Einspritzphase im Teilschnitt;
- Fig. 2: die Detaildarstellung des Gießraums der Vorrichtung aus Figur 1;
- Fig. 3: die schematische Darstellung der Vorrichtung aus Figur 1 in der Prägephase;
- Fig. 4: die Detaildarstellung eines nach dem Prägevorgang ausgeworfenen Kugellagerringteils im Teilschnitt;
- Fig. 5: die schematische Darstellung einer Vorrichtung zur Herstellung von Kugellagerringen in einer weiteren Ausführungsform (Werkzeug geschlossen);
- Fig. 6: die schematische Darstellung der Vorrichtung aus Figur 5 in geöffneter Stellung;
- Fig.7: die schematische Darstellung der Vorrichtung aus Figur 6 mit um 180° rotiertem Kolben;
- Fig. 8: die schematische Darstellung der Vorrichtung aus Figur 7 in geschlossener Stellung (Montageprozess);
- Fig. 9: die schematische Darstellung eines ausgeworfenen Kugellagerrings im Teilschnitt und
- Fig. 10: die Detaildarstellung des Ausschnitts "A" der Darstellung aus Figur 9.

Die als Ausführungsbeispiel gewählte Vorrichtung zur Herstellung von Kugellagerringen besteht im Wesentlichen aus einem Gehäuse 1, in dem ein Tragkörper 2 fest angeordnet ist, der einen ersten Formkern 21 sowie eine erste Prägeplatte 2 aufnimmt. Dem Tragkörper 2 gegenüberliegend ist ein Kolben 3 angeordnet, der einen zweiten Formkern 31 sowie eine zweite Prägeplatte 34 aufweist. Zum Einspritzen von Kunststoffmaterial in die beiden von den Formkernen 21, 31 und Prägeplatten 24, 34 gebildeten Gießraum ist weiterhin eine Einspritzdüse 5 angeordnet.

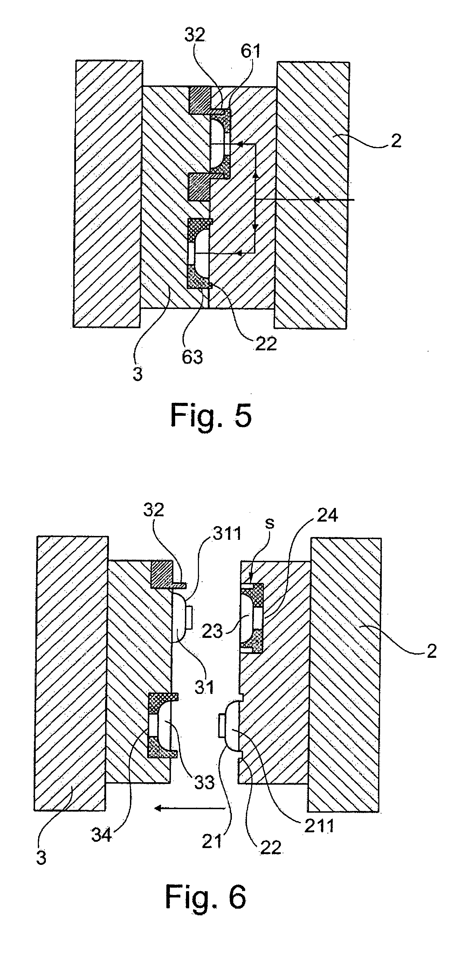

Das Gehäuse 1 ist im Ausführungsbeispiel als hohlzylindrischer Körper ausgebildet, in dem der Tragkörper 2 feststehend angeordnet ist. Auf der Tragkörperfläche ist ein erster Formkern 51 angeformt, der eine Formkontur 211 aufweist, welche der gewünschten Innenkontur eines Kugellagerringteils 61 entspricht. Dabei bildet der erste Formkern im Ausführungsbeispiel ein im Querschnitt hälftig ausgebildetes Kugellagerringteil ab. In der Formkontur 211 des Formkerns 21 sind zwei Einbuchtungen 22 angeordnet. Die Einbuchtungen 22 dienen der Ausbildung einer Auskragung 62 des Kugellagerringsteils 61. Wie in der Ausführungsform gemäß Figur 5 ersichtlich, ist benachbart zu dem ersten Formkern 21 in dem Tragkörper 2 eine Vertiefung 23 eingebracht, die eine erste Prägeplatte 24 aufnimmt. Im Ausführungsbeispiel 5 ist die Prägeplatte 24 nicht als separates Bauteil angeordnet; vielmehr ist der Grund der Vertiefung 23 als Prägefläche ausgebildet, sodass die erste Prägeplatte 24 in den Tragkörper 2 integriert ist. Die zum Betrieb der Vorrichtung erforderliche Hydraulik ist in den Abbildungen durch eingezeichnete Pfeile angedeutet.

Der Kolben 3 ist im Ausführungsbeispiel zylinderförmig ausgebildet. An seinem dem Tragkörper 2 zugewandten Ende ist an dem Kolben 3 der ersten Prägeplatte 24 gegenüberliegende ein zweiter Formkern 31 angeformt, der mit einer Formkontur 311 versehen ist. Die Formkontur 311 des zweiten Formkerns entspricht dabei der Formkontur 211 des ersten Formkerns 21. Anstelle der Einbuchtungen 22 des ersten Formkerns 21 sind hier zwei auskragende Formelemente 32 angeordnet, welche mit den Einbuchtungen 22 des ersten Formkerns 21 korrespondieren. Dabei weisen die Einbuchtungen 22 ein größeres Maß in der Tiefe auf, als die auskragenden Formelemente 32 in ihrer Länge. Die auskragenden Formelemente 32 sind im Ausführungsbeispiel in Form von Einsatzen in dem Kolben 3 angeordnet. Selbstverständlich können diese auch an den Formkolben 3 angeformt sein. Die Ausgestaltung der auskragenden Formelemente 32 als Einsatz hat jedoch den Vorteil, dass hier die relativ schmalen auskragenden Formelemente 32 im Fall einer Beschädigung leicht auswechselbar sind.

Benachbart zum zweiten Formkern 31 ist in den Kolben 3 eine Vertiefung 33 eingebracht, in der eine zweite Prägeplatte 34 derart integriert ist, dass der Grund der Vertiefung 33 die Prägefläche der zweiten Prägeplatte 34 bildet.

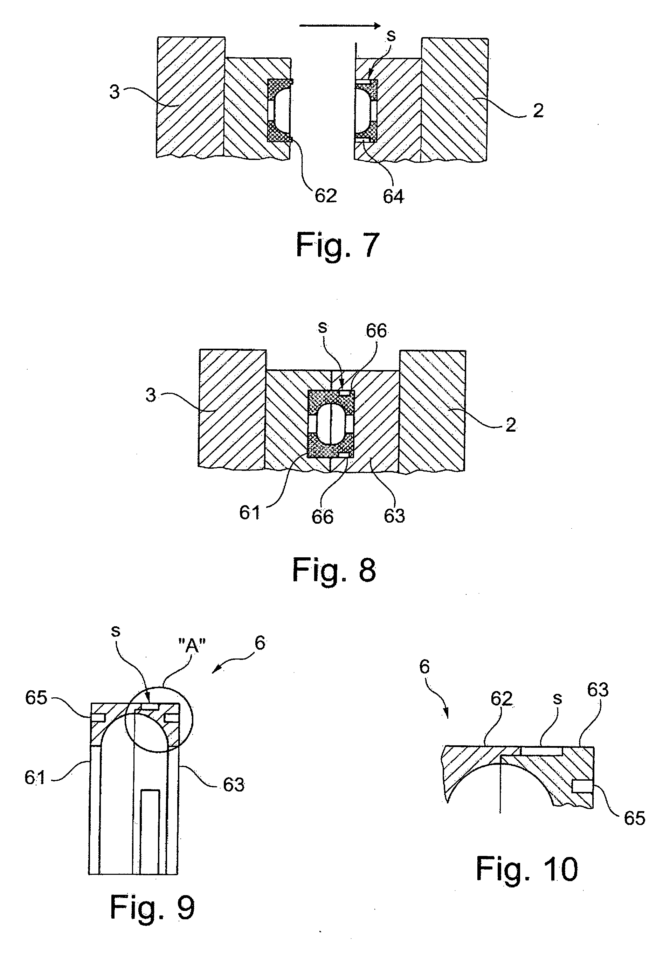

Zur Herstellung eines Kugellagerrings 6 wird die Vorrichtung zunächst bis auf den Hub h geschlossen und es wird ein Spritzgewicht jeweils in die Gießräume 4 über Einspritzdüsen 5 eingebracht. Nachfolgend wird der Kolben 3 in Richtung des Tragkörpers 2 bewegt, wodurch das Kunststoffmaterial in den Gießräumen 4 über die Prägeplatten 24, 34 komprimiert wird (vgl. Figur 5). Anschließend wird der Kolben 3 zurückgefahren. In Figur 6 ist die Ausgestaltung der ausgeformten Kugellagerringteile 61, 63 zu erkennen. Das erste Kugellagerringteil 61 weist hervorstehende Auskragungen 62 auf, wohingegen das zweite Kugellagerringteil 63 mit Ausnehmungen 64 versehen ist. Der Kolben 3 wird nun um 180° um seine Achse rotiert, sodass die beiden ausgeformten Kugellagerringteile 61, 63 gegenüberliegend angeordnet sind (vgl. Figur 7). Nachfolgend wird der Kolben 3 in Richtung des Tragkörpers 2 bewegt, wobei die Kugellagerringteile 61, 63 zusammengesteckt werden. Dabei werden die Auskragungen 62 des ersten Kugellagerringteils 61 in die Ausnehmungen 64 des zweiten Kugellagerringteils 63 eingeführt (vgl. Figur 8). Der in der Ausnehmung 64 verbleibenden Zwischenraum 66 wird nun über eine - nicht dargestellte- Mikro- Spritzvorrichtung Kunststoffmaterial eingespritzt, wodurch eine stoffschlüssige Verbindung zwischen den Kugellagerringteilen 61, 63 erzielt wird. Der so hergestellte Kugellagerring 6 ist in Figur 9 skizziert dargestellt. Hier sind an den Außenseiten des Kugellagerrings 6 Sacklochkonturen 65 erkennbar. Diese Sacklochkonturen 65 sind durch an den Prägeplatten 24, 34 angeordnete Formelemente 35 während des Prägevorgangs in das jeweilige Kugellagerringteil 61, 63 eingeformt.

## Patentansprüche

1. Vorrichtung zur Herstellung von Kugellagerringen im Spritzgießverfahren, mit einem Gehäuse (1), in dem zwei Formkerne (21, 31) angeordnet sind, die jeweils einen Gießraum (4) für einen Kugellagerringteil (61, 63) begrenzen, wobei wenigstens eine Düse (5) zum Einbringen von Kunststoffmaterial in die beiden Gießräume (4) angeordnet ist und wobei zwei Prägeplatten (24, 34) angeordnet sind, welche jeweils einen der beiden Gießräume (4) begrenzen und die relativ zu den Formkernen (21, 31) verschiebbar sind, wodurch das Volumen der Gießräume (4) veränderbar ist, wobei eine Prägeplatte (34) Bestandteil eines Kolbens (3) ist, der relativ zum gegenüberliegenden Formkern (21) verschiebbar ist, wobei benachbart zueinander ein erster Formkern (21) neben einer ersten Prägeplatte (24) an einem Tragkörper (2) angeordnet sind und wobei an dem Kolben (3) benachbart zueinander eine zweite Prägeplatte (34) neben einem zweiten Formkern (31) angeordnet sind, derart, dass jeweils ein Formkern (21, 31) einer Prägeplatte (24, 34) gegenüberliegend angeordnet ist und wobei der Kolben (3) rotierbar ausgebildet ist, derart, dass die Prägeplatten (24, 34) und die Formkerne (21, 31) in eine gegenüberliegende Position bringbar sind.

2. Vorrichtung nach Anspruch 1, **dadurch gekennzeichnet, dass** an wenigstens einer Prägeplatte (24, 34) wenigstens ein Formelement (35) angeordnet ist.

3. Vorrichtung nach Anspruch 1 oder 2, **dadurch gekennzeichnet, dass** in der Formkontur (211) des ersten Formkerns (21) wenigstens eine Einbuchtung (22) vorhanden ist und dass in der Formkontur (311) des zweiten Formkerns (31) wenigstens ein auskragendes Formelement (35) zur Ausformung eines Verbindungselementes angeordnet ist, welches mit der Einbuchtung (22) des ersten Formkerns (21) korrespondiert.

4. Vorrichtung nach Anspruch 3, **dadurch gekennzeichnet, dass** die Einbuchtung (22) ein größeres Maß in der Tiefe aufweist, als das auskragende Formelement (32) in seiner Länge.

5. Vorrichtung nach einem der Ansprüche vorgenannten Ansprüche, **dadurch gekennzeichnet, dass** die erste Prägeplatte (24) innerhalb einer Vertiefung (23) des Tragkörpers (2) gegenüber dessen Oberfläche zurückversetzt und die zweite Prägeplatte (34) innerhalb einer Vertiefung (33) des Kolbens (3) gegenüber dessen Oberfläche zurückversetzt angeordnet sind.

6. Vorrichtung nach Anspruch 5, **dadurch gekennzeichnet, dass** wenigstens eine Düse zum Einbringen von Kunststoffmaterial in die Vertiefung (23) des Tragkörpers (2) und/oder in die Vertiefung (33) des Kolbens (3) angeordnet ist.

7. Vorrichtung nach Anspruch 6, **dadurch gekennzeichnet, dass** die beiden Formkerne (21, 31) derart ausgebildet sind, dass die durch die Einbuchtung (22) des ersten Formkerns (21) an dem ersten Kugellagerringteil (61) ausgeformte Auskragung (62) vollständig in die durch das auskragende Formelement (32) des zweiten Formkerns (31) in das zweite Kugellagerringteil (63) eingeformte Ausnehmung (64) einschiebbar ist.

8. Verfahren zur Herstellung eines Kugellagerrings, wobei zunächst innerhalb eines Werkzeugs zwei Ringteile (61, 63) im Spritzgießverfahren hergestellt werden, wobei der Gießraum (4) eines jeweiligen Ringteiles (61, 63) nach dem Einbringen des Kunststoffmaterials über eine Prägeplatte (24, 34) verkleinert wird, wodurch das Kunststoffmaterial verdichtet wird, anschließend die beiden Ringteile (61, 63) innerhalb des Werkzeuges ohne vorheriges Auswerfen gegenüber positioniert und nachfolgend miteinander verbunden werden, wonach der so hergestellte Kugellagerring (6) ausgeworfen wird.

9. Verfahren nach Anspruch 8, **dadurch gekennzeichnet, dass** an den beiden Kugellagerringteilen (61, 63) innerhalb des Spritzgießprozesses zu deren Verbindung korrespondierende Verbindungselemente (62, 64) angeformt werden, welche im Zuge der nachfolgenden Positionierung der Kugellagerringteile (61, 63) innerhalb des Werkzeuges miteinander verbunden werden.

10. Verfahren nach Anspruch 9, **dadurch gekennzeichnet, dass** die korrespondierenden Verbindungselemente (62, 64) derart ausgebildet werden, dass zwischen diesen nach deren Verbindung ein Zwischenraum (66) verbleibt, wobei der Zwischenraum (66) im Anschluss an die Verbindung in einem anschließenden Spritzprozess mit Kunststoffmaterial verfüllt wird.

11. Verfahren nach einem der Ansprüche 8 bis 10, **dadurch gekennzeichnet, dass** die Herstellung der Kugellagerringteile (61, 63) diametral gegenüberliegend innerhalb des Werkzeuges erfolgt und dass die Positionierung der Kugellagerringteile (61, 63) innerhalb des Werkzeuges über eine Rotation eines ein Kugellagerringteil (63) exzentrisch aufnehmenden Kolbens (3) um eine zwischen den Kugellagerringteilen (61, 63) verlaufende Rotationsachse erfolgt.

## Claims

1. Device for producing ball bearing rings in an injection moulding process having a housing (1), in which two mould cores (21, 31) are arranged, which respectively delimit one casting space (4) for a ball bearing ring part (61, 63), wherein at least one nozzle (5) for inserting plastic material in the two casting spaces (4) is arranged and wherein two dies (24, 34) are arranged, which respectively delimit one of the two casting spaces (4), and which are movable relative to the mould cores (21, 31), whereby the volume of the casting spaces (4) is alterable, wherein a die (34) forms part of a piston (3), which is movable relative to the opposite mould core (21), wherein adjacent to each other a first mould core (21) is arranged next to a first die (24) at a support frame (2) and wherein at the piston (3) adjacent to each other a second die (34) is arranged next to a second mould core (31) in a manner that one mould core, respectively, (21, 31) is arranged opposite of a die (24, 34), and wherein the piston (3) is rotatable in a way that the dies (24, 34) and the mould cores (21, 31) can be brought in an opposite position.

2. Device according to claim 1, **characterised in that** at least one mould part (35) is arranged at at least one die (24, 34).

3. Device according to claim 1 or 2, **characterised in that** in the mould contour (211) of the first mould core (21) there is at least one indentation (22) and that in the mould contour (311) of the second mould core (31) at least one projecting mould part (35) for forming a connecting element is arranged, which corresponds to the indentation (22) of the first mould core (21).

4. Device according to claim 3, **characterised in that** the indentation (22) has a greater degree of depth compared to the length of the projecting mould part (32).

5. Device according to one of the previous claims, **characterised in that** the first die (24) inside a recess (23) of the supporting body (2) is set back vis-a-vis its surface and the second die (34) inside a recess (33) of the piston (3) is set back vis-à-vis its surface.

6. Device according to claim 5, **characterised in that** at least one nozzle for inserting plastic material in the recess (23) of the supporting body (2) and/or in the recess (33) of the piston (3) is arranged.

7. Device according to claim 6, **characterised in that** the two mould cores (21, 31) are designed in a way that the projection (62) formed by the indentation (22) of the first mould core (21) at the first ball bearing ring part (61) is fully insertable into the recess (64) formed into the second ball bearing ring part (63) by the projecting mould part (32) of the second mould core (31).

8. Method for producing a ball bearing ring, wherein first of all inside a tool two ring parts (61, 63) are produced by means of an injection moulding process, wherein the casting space (4) of a respective ring part (61, 63) is reduced after inserting the plastic material via a die (24, 34), whereby the plastic material is compacted, then without previous ejection both ring parts (61, 63) are oppositely positioned and subsequently connected to each other inside the tool, after which the ball bearing ring (6) thus produced is ejected.

9. Method according to claim 8, **characterised in that** corresponding connecting elements (62, 64) are moulded on the two ball bearing ring parts (61, 63) inside the injection moulding process in order to connect them, which connecting elements are connected to each other inside the tool in the course of the subsequent positioning of the ball bearing ring parts (61, 63).

10. Method according to claim 9, **characterised in that** the corresponding connecting elements (62, 64) are designed in a way that a gap (66) remains between them after being connected, wherein the gap (66) subsequent to the connection is filled with plastic material in a subsequent injection process.

11. Method according to one of claims 8 to 10, **characterised in that** the production of the ball bearing ring parts (61, 63) is carried out diametrically opposite inside the tool and that the positioning of the ball bearing ring parts (61, 63) inside the tool is carried out via a rotation of a piston (3) eccentrically receiving a ball bearing ring part (63) about a rotation axis running between the ball bearing ring parts (61, 63).

## Revendications

1. Dispositif destiné à la fabrication d'anneaux de roulement à billes selon un procédé de moulage par injection, comprenant un carter (1) dans lequel sont disposés deux noyaux (21, 31) de moule qui délimitent respectivement un volume de moulage (4) pour un anneau (61, 63) de roulement à billes, sachant qu'au moins une buse (5) est agencée pour introduire de la matière plastique dans les deux cavités de moulage (4) et sachant que sont disposées deux plaques de gaufrage (24, 34) qui délimitent chacune l'une des deux cavités de moulage (4) et qui sont déplaçables relativement aux noyaux (21, 31) de moule, ce qui permet de modifier le volume des cavités de moulage (4), sachant qu'une plaque de gaufrage (34) fait partie intégrante d'un piston (3) qu'il est possible de déplacer relativement au noyau (21) de moule situé en face, sachant qu'au voisinage l'un de l'autre se côtoient un premier noyau (21) de moule et une première plaque de gaufrage (24) contre un corps support (2), et sachant que contre le piston (3) se côtoient au voisinage l'un de l'autre une deuxième plaque de gaufrage (34) et un deuxième noyau (31) de moule, de sorte que chaque fois un noyau (21, 31) de moule est agencé en face d'une plaque de gaufrage (24, 34) et sachant que le piston (3) est configuré de façon à pouvoir tourner, de sorte que les plaques de gaufrage (24, 34) et les noyaux (21, 31) de moule puissent être amenés en position en face l'un de l'autre.

2. Dispositif selon la revendication 1, **caractérisé en ce que** sur au moins une plaque de gaufrage (24, 34) est agencé au moins un élément (35) de moule.

3. Dispositif selon la revendication 1 ou 2, **caractérisé en ce que** dans le contour (211) de moule du premier noyau (21) de moule se trouve au moins un creux et **en ce que** dans le contour (311) de moule du deuxième noyau (31) au moins un élément (35) de moule faisant saillie est agencé pour démouler un élément de jonction qui épouse le creux (22) du premier noyau de moule (21).

4. Dispositif selon la revendication 3, **caractérisé en ce que** le creux (22) présente une cote de profondeur supérieure à la cote de longueur de l'élément (32) de moule faisant saillie.

5. Dispositif selon l'une des revendications précédentes, **caractérisé en ce que** la première plaque de gaufrage (24) est agencée en retrait à l'intérieur d'un creux (23) du corps porteur (2) par rapport à sa surface, et que la deuxième plaque de gaufrage (34) est agencée à l'intérieur d'un creux (33) du piston (3) en retrait par rapport à sa surface.

6. Dispositif selon la revendication 5, **caractérisé en ce qu'**est agencée au moins une buse pour introduire la matière plastique dans le creux (23) du corps porteur (2) et/ou dans le creux (33) du piston (3).

7. Dispositif selon la revendication 6, **caractérisé en ce que** les deux noyaux (21, 31) de moule sont configurés de sorte à permettre d'insérer intégralement la saillie (62) - moulée du fait du creux (22) du premier noyau (21) de moule contre la première partie (61) de l'anneau de roulement à billes - dans l'évidement (64) formé par l'élément saillant (32) de moule du deuxième noyau (31) de moule dans la deuxième partie (63) de l'anneau de roulement à billes.

8. Procédé destiné à la fabrication d'un anneau de roulement à billes, sachant que dans un premier temps deux pièces annulaires (61, 63) sont fabriquées par moulage injecté, sachant que le volume de moulage (4) d'une pièce annulaire respective (61, 63) est rapetissé par une plaque de gaufrage (24, 34) après l'introduction de la matière plastique, ce qui a pour effet d'accroître la densité de la matière plastique, qu'ensuite les deux pièces annulaires (61, 63) sont, sans éjection préalable, positionnées en face l'une de l'autre dans le moule puis sont reliées ensemble, ce après quoi l'anneau (6) de roulement à billes ainsi fabriqué est éjecté.

9. Procédé selon la revendication 8, **caractérisé en ce que** pendant le processus de moulage par injection sont moulés, contre les deux pièces annulaires (61, 63) de roulement à billes, des éléments de jonction (62, 64) correspondants pour les relier, éléments qui au fil du positionnement subséquent des pièces annulaires (61, 63) du roulement à billes sont reliés ensemble à l'intérieur du moule.

10. Procédé selon la revendication 9, **caractérisé en ce que** les éléments de jonction (62, 64) correspondants sont configurés de sorte qu'il reste un volume intermédiaire (66) entre eux après leur jonction, sachant qu'après la jonction, l'espace intermédiaire (66) est comblé de matière plastique au cours d'un processus d'injection qui s'ensuit.

11. Procédé selon l'une des revendications 8 à 10, **caractérisé en ce que** la fabrication des pièces annulaires (61, 63) de roulement à billes a lieu de manière diamétralement opposée dans le moule, et que le positionnement des pièces annulaires (61, 63) de roulement à billes à l'intérieur du moule a lieu via la rotation d'un piston (3), recevant de manière excentrée une pièce annulaire (63) de roulement à billes, selon un axe de rotation passant entre les pièces annulaires (61, 63) de roulement à billes.
